# EUROPÄISCHE PATENTSCHRIFT

(11) **EP 2 855 961 B1**
(45) Veröffentlichungstag und Bekanntmachung des Hinweises auf die Patenterteilung: **11.04.2018**
(21) Anmeldenummer: 13727851.1
(22) Anmeldetag: 03.06.2013
(51) Int. Cl.: F16D 65/097

(54) **BREMSZANGE**
BRAKE CALLIPER
ETRIER DE FREIN

(30) Priorität: 02.06.2012 DE 102012209341
(43) Veröffentlichungstag der Anmeldung: 08.04.2015
(73) Patentinhaber: Gustav Magenwirth GmbH & Co. KG, 72574 Bad Urach (DE)
(72) Erfinder: RUOPP, Michael, 89180 Berghülen (DE)
(74) Vertreter: Friese Goeden Patentanwälte PartGmbB
(86) Internationale Anmeldenummer: PCT/EP2013/061365
(87) Internationale Veröffentlichungsnummer: WO 2013/178822

(56) Entgegenhaltungen:
- WO-A1-2010/073277
- DE-A1- 3 124 631
- DE-A1- 19 505 318
- DE-B- 1 194 275
- FR-A3- 2 555 271

## Beschreibung

Die Erfindung betrifft eine Bremszange gemäß dem Oberbegriff von Anspruch 1, wie z.B. aus WO-A-2010/073277 hervorgeht. Bei hydraulischen Fahrradscheibenbremsen ist es bekannt, die Bremsbeläge mit einer Federeinrichtung gegen die jeweiligen Kolben vorzuspannen. Dadurch liegen die Bremsbeläge immer am Kolben an, wodurch ein Klappern vermieden und ein schleiffreier Lauf der Bremsscheibe gewährleistet wird. Wichtig ist es dabei, die Kraft der Federeinrichtung derart einzustellen, dass sie kleiner als die Rückzugkraft des Kolbens ist, um die Rückzugsfunktion der den Kolben umschließenden Dichtung des Druckraums nicht merklich zu beeinflussen. Gleichzeitig sollte die Kraft der Federeinrichtung groß genug sein, um eine gute Anlage des Bremsblags an dem Kolben zu gewährleisten.
Bekannte Federeinrichtungen weisen eine Basis auf, von der sich pro Bremsbelag jeweils zwei Schenkel in etwa senkrecht zu der Basis entlang der Ränder der Beläge der Bremsbeläge derart erstrecken, dass der Belag von den beiden Schenkeln eingerahmt wird. An den Enden der Schenkel sind Fortsätze vorgesehen, die die Beläge hintergreifen. Dieser bekannten Federeinrichtungen haben den Nachteil, dass sie einen relativ großen Bauraum erfordern. Daher sind derartige Federeinrichtungen insbesondere für Vierkolben-Bremszangen nachteilig, bei denen vier Einzelbeläge vorgesehen werden sollen.
Der Erfindung liegt die Aufgabe zugrunde, eine Bremszange anzugeben, die eine Federeinrichtung zur Vorspannung der Bremsbeläge aufweist, die bei relativ kleinem Bauraum eine hinreichende Federkraft bereitstellt.
Diese Aufgabe der Erfindung wird mit einer Bremszange gemäß den Merkmalen des Anspruchs 1 gelöst. Vorteilhafte Ausgestaltungen der Erfindung sind in den abhängigen Ansprüchen bzw. der Beschreibung und insbesondere der folgenden Beschreibung angegeben.

Diese Ausführung der Erfindung hat den Vorteil, dass eine möglichst große Belagsfläche bei einem kleinem Bauraum ausgebildet werden kann, wobei gleichzeitig eine gute Krafteinleitung der Federeinrichtung auf die Bremsbeläge gewährleistet ist.
Gemäß einer bevorzugten Ausführung der Erfindung weist die Bremszange die Zusammenschau der oben genannten Merkmale auf. Es ist erfindungsgemäß auch möglich nur eine beliebige Unterkombination der genannten Merkmale vorzusehen.

Erfindungsgemäß können sich die sich gegenüberliegenden Schenkel von einer Seite der Basis zu einem Bremsbelag erstrecken, der auf der gegenüberliegenden Seite angeordnet ist.

Erfindungsgemäß können die sich gegenüberliegenden Schenkel der Federeinrichtung zueinander versetzt angeordnet sein.

Erfindungsgemäß können die Schenkel jeweils einen Biegebereich und einen Gegenbiegebereich aufweisen.

Erfindungsgemäß können die sich gegenüberliegenden Schenkel jeweils einen Biegebereich aufweisen, deren Abstand größer als der Abstand der beiden entsprechenden sich gegenüberliegenden Bremsbeläge ist, an denen die Schenkel anliegen.

Erfindungsgemäß können sich die Biegebereiche über einen Winkelbereich von mehr als 120 Grad, vorzugsweise über einen Winkelbereich von mehr als 150 Grad und bevorzugt über einen Winkelbereich von ungefähr 160 Grad erstrecken.

Erfindungsgemäß können sich die Gegenbiegebereiche über einen Winkelbereich von mehr als 30 Grad, vorzugsweise über einen Winkelbereich von mehr als 60 Grad und bevorzugt über einen Winkelbereich von ungefähr 70 Grad erstrecken.

Bei bekannten Bremszangen besteht das Problem, dass sich die Bremszangen bei extremen Bremsbetätigungen, beispielsweise bei langen Bergabfahrten, stark erhitzen. Das Problem der Wärmeabfuhr ist im Stand der Technik nicht zufriedenstellend gelöst.

Daher ist es auch eine Aufgabe der Erfindung, eine Bremszange anzugeben, bei der eine gute Kühlung bei kleinem Bauraum erreicht wird.
Gemäß einer Ausführung der Erfindung wird eine Bremszange eines hydraulischen Bremssystem mit mehreren Kolben, die jeweils in einem Zylinder entlang der Achse des Zylinders verschiebbar angeordnet sind, mehreren Bremsbelägen, die bei der Betätigung der Bremse von den Kolben gegen eine Bremsscheibe gedrückt werden, und Brücken, die die gegenüberliegenden Abschnitte der Bremszange miteinander verbinden, angegeben, wobei die Brücken zumindest eine und vorzugsweise mehrere Kühlrippen aufweisen.
Diese Ausführung der Erfindung hat den Vorteil, dass eine gute Kühlung bei einem sehr kleinem Bauraum erreicht werden kann.
Es ist klar, dass die folgenden optionalen Merkmale für alle oben genannten erfinderischen Ausführungen gelten.
Erfindungsgemäß kann die Bremszange vier Kolben aufweisen, die in zwei sich gegenüberliegenden Zylinderpaaren angeordnet sind.
Erfindungsgemäß kann die Bremszange vier Bremsbeläge aufweisen, die jeweils einem Kolben zugeordnet sind. Erfindungsgemäß können die Bremsbeläge einen geteilten Bremsbelag aufweisen, zwischen denen sich eine Nut zur Aufnahme eines Schenkels der Federeinrichtung erstreckt. Die Schenkel weisen an ihren Enden Halteabschnitte auf. Diese greifen an der Unterkante der Bremsbeläge an. In diesem Fall verlaufen die Schenkel vorzugsweise in einer Nut, die zwischen Belagsteilen des Bremsbelags vorgesehen oder in dem Belag ausgebildet ist. Alternativ oder zusätzlich können die Halteabschnitte in Eingriffsöffnungen in dem Belagsträger eingreifen. Die Eingriffsöffnungen können in Aussparungen des Belags vorgesehen sein. Da die Schenkel bei diesen Ausführungen kürzer ausgebildet sind, ist es vorteilhaft, die Basis der Federeinrichtung breiter auszubilden, damit die Drehpunkte bzw. Biegebereiche der sich gegenüberliegenden Schenkel weiter auseinander angeordnet sind.

Erfindungsgemäß wird auch eine hydraulische Bremse, insbesondere eine hydraulische Scheibenbremse mit einer erfindungsgemäßen Bremszange angegeben.

Die Erfindung wird im Folgenden anhand der in den Figuren gezeigten Ausführungsbeispiele näher beschrieben.
- Fig. 1: zeigt eine perspektivische Ansicht einer Bremszange gemäß einer Ausführung der Erfindung von schräg oben.
- Fig. 2: zeigt eine perspektivische Ansicht der Bremszange von schräg unten.
- Fig. 3: zeigt eine Seitenansicht einer Federeinrichtung der Bremszange von Fig. 1, d.h. eine Ansicht in Richtung der Bewegung des Kolbens.
- Fig. 4: zeigt eine Ansicht der Federeinrichtung von Fig. 3 aus einer Richtung entsprechend der Drehrichtung der Bremsscheibe.
- Fig. 5: zeigt eine der Ansicht von Fig. 3 entsprechende Ansicht einer Federeinrichtung gemäß einer alternativen Ausführung der Erfindung.
- Fig. 6: zeigt eine der Ansicht von Fig. 4 entsprechende Ansicht der Federeinrichtung von Fig. 5.
- Fig. 7: zeigt eine Seitenansicht eines Bremsbelags der Bremszange von Fig. 1, d.h. eine Ansicht in Richtung der Bewegung des Kolbens.
- Fig. 8: zeigt eine Vorderansicht des Bremsbelags von Fig. 7, d.h. eine Ansicht aus einer Richtung entsprechend der Drehrichtung der Bremsscheibe.
- Fig. 9: zeigt eine Ansicht des Bremsbelags von Fig. 7 von oben.
- Fig. 10: zeigt eine der Ansicht von Fig. 7 entsprechende Ansicht eines Bremsbelags gemäß einer alternativen Ausführung der Erfindung.
- Fig. 11: zeigt eine Ansicht von zwei Bremsbelägen mit einer Federeinrichtung und einem Bolzen der Bremszange von Fig. 1 aus einer Richtung entsprechend der Drehrichtung der Bremsscheibe.
- Fig. 12: zeigt eine Ansicht der in Fig. 11 dargestellten Teile von oben.
- Fig. 13: zeigt eine der Ansicht von Fig. 11 entsprechende Ansicht mit Bremsbelägen gemäß Fig. 10 und einer entsprechenden Federeinrichtung gemäß der alternativen Ausführung der Erfindung von Fig. 10.
- Fig. 14: zeigt eine der Fig. 12 entsprechende Ansicht der in Fig. 13 gezeigten Teile.
- Fig. 15: zeigt eine Ansicht der in Fig. 13 gezeigten Teile aus der Richtung des auf den Bremsbelag wirkenden Kolbens, d.h. dass die Beläge durch den Bremsbelagträger verdeckt sind.
- Fig. 16: zeigt eine Ansicht von einem Verschluss mit einer Blende der Bremszange von Fig. 1.
- Fig. 17: zeigt einen Schnitt durch den Verschluss und die Blende von Fig. 16 entlang der Linie XVII-XVII von Fig. 16.
- Fig. 18: zeigt eine der Fig. 16 entsprechende Ansicht von dem Verschluss von Fig. 16 ohne Blende.
- Fig. 19: zeigt eine der Fig. 16 entsprechende Ansicht der Blende von dem Verschluss von Fig. 16.
- Fig. 20: zeigt eine Seitenansicht der Blende von Fig. 19.
- Fig. 21: zeigt einen Schnitt durch die Bremszange von Fig. 1 durch die Mittelebene eines Zylinderpaares.
- Fig. 22: zeigt eine Vergrößerung des Schnitts von Fig. 21 in dem Kreis XXII.
- Fig. 23: zeigt eine Seitenansicht der Bremszange von Fig. 1.
- Fig. 24: zeigt einen Abschnitt einer Bremszange gemäß einer alternativen Ausführung der Erfindung in einer Darstellung, die der Seitenansicht von Fig. 23 entspricht und die Unterschiede zu der Ausführung der Bremszange von Fig. 23 bzw. Fig. 1 zeigt.

In der Beschreibung des Ausführungsbeispiels werden folgende Bezugszeichen verwendet:
- 100: Bremszange
- 101: Zylinder
- 102: Bremsschacht
- 103: Druckraum
- 104: Nut
- 105: Phase
- 106: Anschlussabschnitt
- 107: Bolzenaufnahme
- 110: Bremsbelag
- 111: Träger
- 112: Belagträgerfläche
- 113: Fortsatz
- 114: Riffelung
- 115: Befestigungsöffnung
- 116: Unterkante
- 117: Eingriffsöffnung
- 118: Belag
- 119: Nut
- 1191: Aussparung
- 120: Federeinrichtung
- 121: Basis
- 122: Biegebereich
- 123: Gegenbiegebereich
- 124: Schenkel
- 125: Verstärkung
- 126: Rille
- 127: Einrastabschnitt
- 128: Halteabschnitt
- 130: Brücke
- 131: Aussparung
- 132: Kühlrippe (am Rand)
- 133: Kühlrippe (in der Mitte)
- 140: Deckel
- 141: Verschlussglied
- 142: Blende
- 143: Gewindeabschnitt
- 144: Werkzeugeingriffabschnitt
- 150: Bolzen
- 151: Shaft
- 152: Kopf
- 153: Verdickung

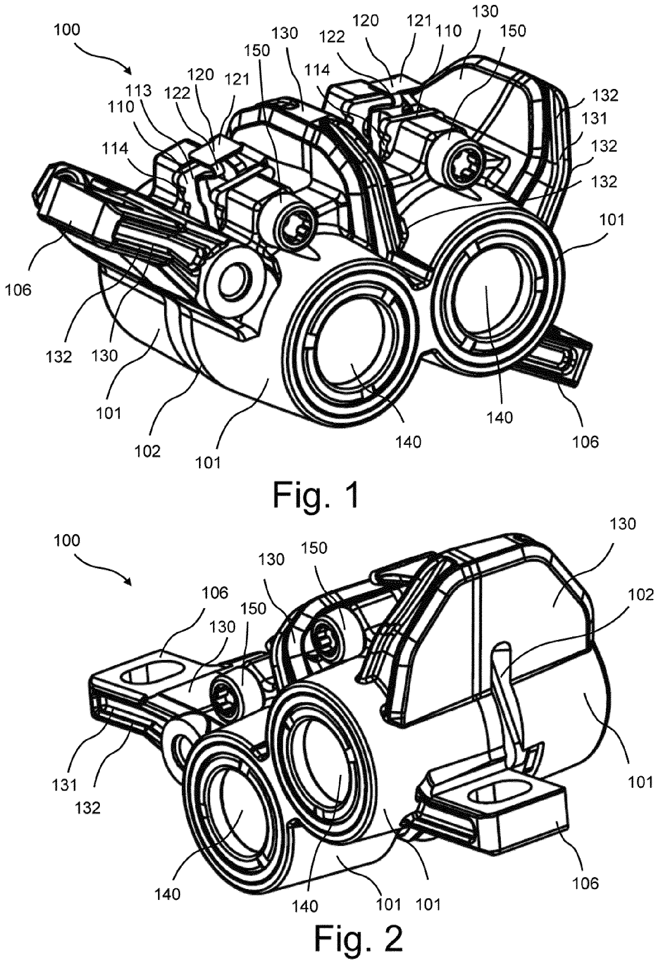

Die Figuren 1 bis 4 und 7 bis 9 und 11 bis 12 sowie 16 bis 23 zeigen eine Bremszange gemäß einer Ausführung der Erfindung.

Die Bremszange 100 weist vier paarweise gegenüberliegend angeordnete Zylinder 101 auf. Zwischen den Zylindern 101 ist ein Bremsschacht 102 angeordnet, in dem sich eine nicht dargestellte Bremsscheibe dreht.

In den Zylindern 101 sind jeweils nicht dargestellte Kolben angeordnet, die sich bei der Betätigung der Bremse entlang der Achse des entsprechenden Zylinders 101 bewegen und jeweils einen Bremsbelag 110 gegen die Bremsscheibe pressen, um deren Bewegung zu verzögern. Beim Lösen der Bremsen ziehen sich die Kolben in den entsprechenden Zylinder 101 zurück. Damit die Bremsbeläge nicht klappern sind diese mit einer Federeinrichtung 120 gegen die Kolben vorgespannt.

In den Zylindern 101 sind jeweils ein Druckraum 103 und eine Nut 104 vorgesehen. In der Nut 104 ist eine nicht dargestellte Dichtung vorgesehen, die den Druckraum 103 gegen den Kolben abdichtet.

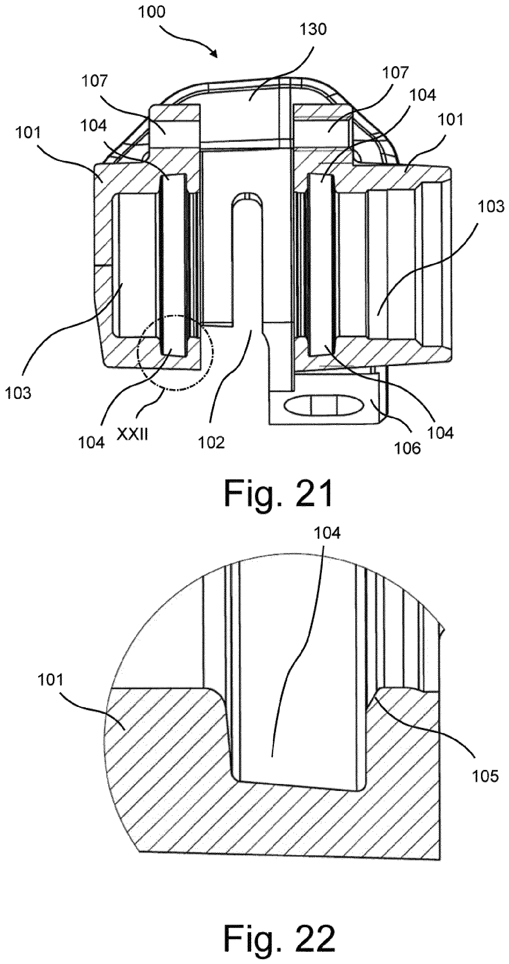

Wie man am besten in Fig. 22 sehen kann, weist die Nut 104 eine Phase 105 auf, in die sich die Dichtung beim Bremsen legt. Beim Lösen der Bremse geht die Dichtung in Ihre entspannte Stellung zurück und zieht den Kolben somit von der Bremsscheibe weg. Durch die Federeinrichtung 120 wird der Bremsbelag 110 gegen den Kolben gespannt und somit ebenfalls von der Bremsscheibe weggezogen, wenn der Bremsvorgang beendet wird.

Gemäß einem Aspekt der Erfindung weist die Phase einen Winkel von ungefähr 30° auf, während bekannte Phasen einen Winkel von etwas über 45° aufweisen. Außerdem beträgt die Breite der Phase (d.h. die Abmessung entlang der Achse des Zylinders) gemäß diesem Aspekt der Erfindung nur etwa 0,3 mm, während bekannte Phasen eine Breite von ungefähr 0,6 mm aufweisen. Diese erfindungsgemäße Ausbildung hat den Vorteil, dass ein kleinerer Luftspalt entsteht und die Bremse schneller und genauer anspricht.

Die Bremszange 100 weist zwei Anschlussabschnitte 106 auf, mit denen sie auf bekannte Weise an dem Fass einer Gabel oder an dem Hinterbau eines Fahrrads befestigt werden kann.

In der Bremszange 100 sind Bolzenaufnahmen 107 vorgesehen, wie man am besten in Fig. 21 sehen kann.

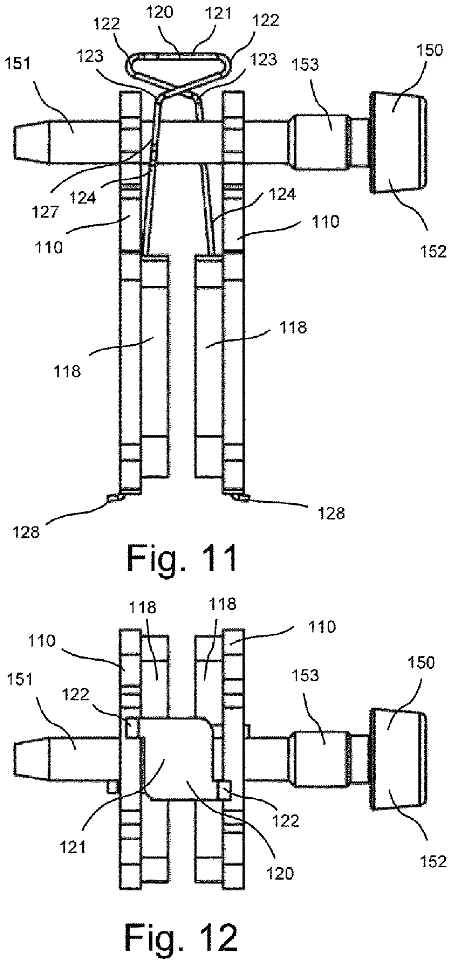

In den Bolzenaufnahmen 107 sind Bolzen 150 angeordnet, die, wie man in den Figuren 11 und 12 sehen kann, die Bremsbeläge 110 und die Federeinrichtung 120 halten. Der Übersicht halber ist die Bremszange 100 in den Figuren 11 und 12 nicht dargestellt, damit man das Zusammenspiel zwischen dem Bolzen 150, den Bremsbelägen 110 und der Federeinrichtung 120 besser sehen kann.

Die Bolzen 150 weisen jeweils einen Schaft 151, einen Kopf 152 und eine Verdickung 153 auf. Mit einem Bolzen 150 werden jeweils ein Paar Bremsbeläge 110 und eine zugehörige Federeinrichtung 120 an der Bremszange 100 angeordnet.

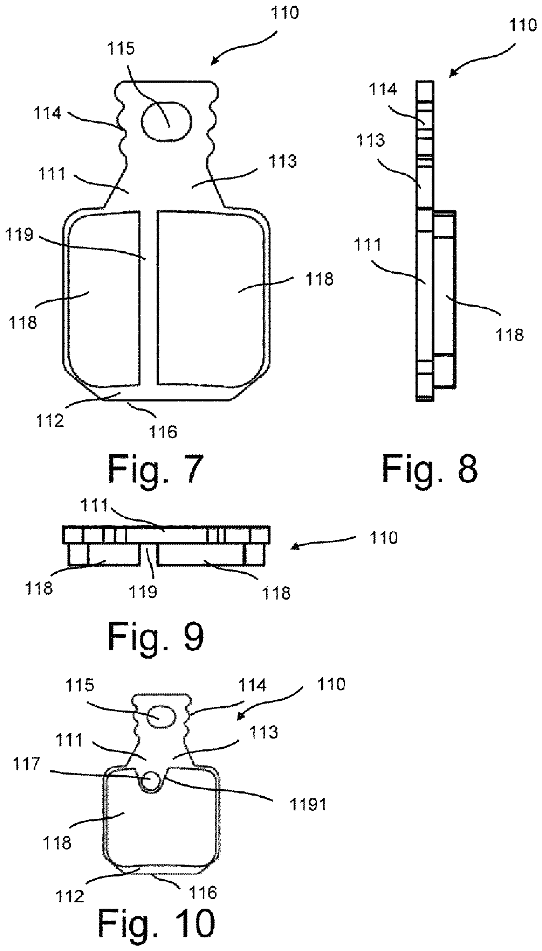

Wie am Besten in den Figuren 7 bis 9 und 11 bis 12 sehen kann, weisen die Bremsbeläge 110 einen Träger 111 auf. Der Träger hat eine Belagträgerfläche 112 und einen Fortsatz 113. An dem Fortsatz 113 ist eine Riffelung vorgesehen. Diese hat den Vorteil, dass man den Bremsbelag 110 mit den Fingernägeln besser greifen kann, damit der Bremsbelag 110 beim Einsetzen und entfernen besser gehalten werden kann und nicht in den Bremsschacht rutscht. Diese geriffelte Oberfläche an dem Fortsatz 113 ist im Stand der Technik nicht bekannt und kann eine eigenständige Erfindung begründen.

In dem Fortsatz 113 ist eine Befestigungsöffnung 115 vorgesehen, durch die der Bolzen 150 mit seinem Schaft 151 greift, um den Bremsbelag 110 an der Bremszange 100 anzuordnen, indem der Bolzen 150 in die Bolzenaufnahmen 107 eingreift.

Der Bremsbelag 110 weist eine Unterkante 116 auf, an der Halteabschnitte 128 der Schenkel 124 der Federeinrichtung 120 angreifen, um den Bremsbelag zu sichern, wenn der Bolzen beispielsweise zum Wechsel der Bremsbeläge 110 aus den Bolzenaufnahmen 107 herausgezogen ist.

Auf der Belagträgerfläche 112 ist ein Belag 118 angeordnet, der in zwei Teile unterteilt ist. Zwischen den beiden Teilen des Belags 118 verläuft eine Nut 119, in der ein Schenkel 124 der Federeinrichtung 120 angeordnet ist.

Gemäß nicht dargestellten Ausführungen der Erfindung kann die Nut nicht über die volle Stärke des Belags 118 ausgebildet sein, sondern lediglich eine hinreichende Vertiefung in dem Belag 118 sein, die ausreicht, um den Schenkel 124 bis zu einer bestimmten gewünschten Abnutzung des Belags 118 aufzunehmen.

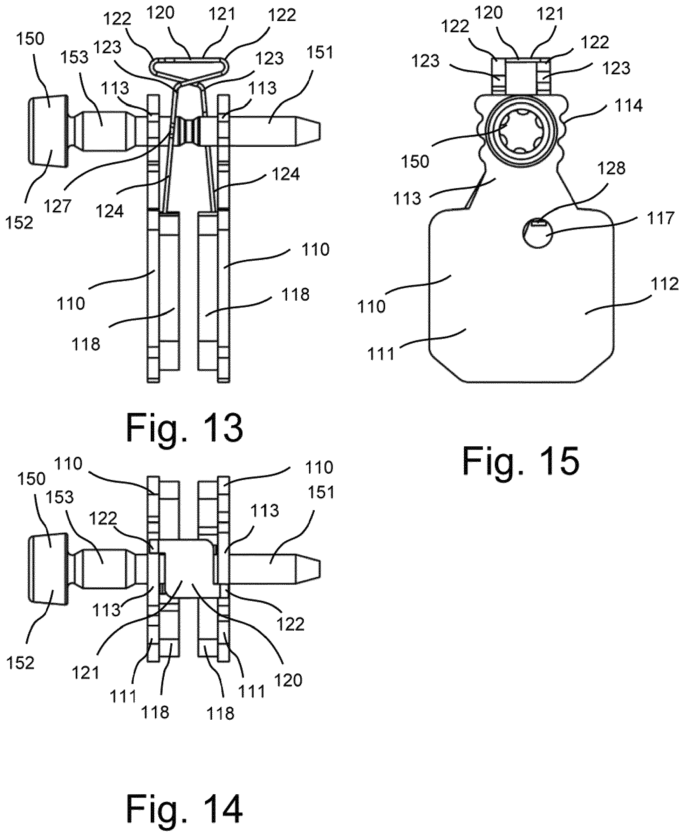

Die Figuren 10 und 13 bis 15 zeigen Details einer alternativen Ausführung der Erfindung, wobei im Zusammenhang mit diesen Figuren im Wesentlichen nur die Unterschiede zu den im Zusammenhang mit den anderen Figuren beschriebenen Ausführungen der Erfindung erläutert werden und im Übrigen auf deren Beschreibung verwiesen wird.

Gemäß der alternativen in den Figuren 10 und 13 bis 15 dargestellten Alternative weist der Bremsbelag 110 eine Eingriffsöffnung 117 auf, in die der Halteabschnitt 128 des Schenkels 124 der Federeinrichtung 120 eingreifen kann, Bei dieser Ausführung sind die Schenkel 124 der Federeinrichtung 120 kürzer und die Basis 121 der Federeinrichtung 120 im Vergleich zu der in den Figuren 7 bis 9 und 11 bis 12 gezeigten Ausführung breiter ausgebildet. Der Belag 118 weist eine Aussparung 1191 auf, in der die Eingriffsöffnung ausgebildet ist. Diese Ausführung hat den Vorteil, dass die zur Verfügung stehende Belagfläche größer ist.

Die Federeinrichtung 120 weist eine Basis 121 auf, an der die Schenkel 124 angreifen. Die Schenkel 124 sind an gegenüberliegenden Seiten der Basis 121 derart versetzt zueinander angeordnet, dass sie nebeneinander angeordnet sind. Die Schenkel 124 weisen jeweils einen Biegebereich 122 auf, in dem sich die Schenkel 124 um einen Winkel von ungefähr 160 Grad in Richtung der anderen Seite der Basis erstrecken. Dort weisen die Schenkel 124 jeweils einen Gegenbiegebereich 123 auf, in dem sich die Schenkel 124 um einen Winkel von ungefähr 70 Grad in die Richtung erstrecken. Durch den Biegebereich und den Gegenbiegebereich wird erreicht, dass sich die Schenkel 124 von einer Seite der Basis 121 der Federeinrichtung 120 zu der anderen Seite der Basis 121 der Federeinrichtung 120 verlaufen und dort an dem gegenüberliegenden Bremsbelag 110 angreifen. Das hat den Vorteil, dass die Drehpunkte der Schenkel 124 günstiger für eine Kraftübertragung auf die Bremsbeläge liegen, so dass im Gegensatz zum Stand der Technik weniger Schenkel bzw. schwächere Schenkel bzw. kürzere Schenkel eingesetzt werden können, so dass eine größere Belagfläche zur Verfügung steht bzw. ein kleinerer Bauraum benötigt wird. Das ist insbesondere bei Vierkolben-Bremszangen mit vier einzelnen Belägen von Vorteil, wo wegen des Vorsehens einzelner Beläge weniger Bauraum zur Verfügung steht. Die Ausbildung einer Vierkolben-Bremszange mit vier einzelnen Belägen hat den Vorteil, dass für einen gleichmäßigen Anpressdruck der Beläge an die Bremsscheibe gleiche Kolbendurchmesser vorgesehen werden können. Bei der Verwendung von nur zwei Bremsbelägen (einer pro Seite) ist es hingegen wünschenswert, wenn Kolben mit unterschiedlichen Durchmessern eingesetzt werden, um im in Laufrichtung gesehen vorderen und hinteren Bereich des Bremsbelags ähnlich Anpresskräfte zu erreichen.

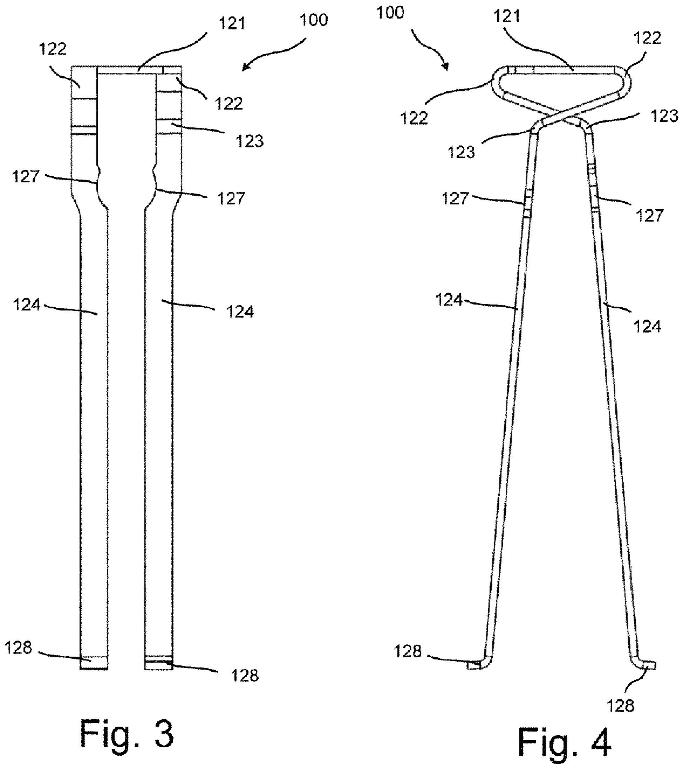

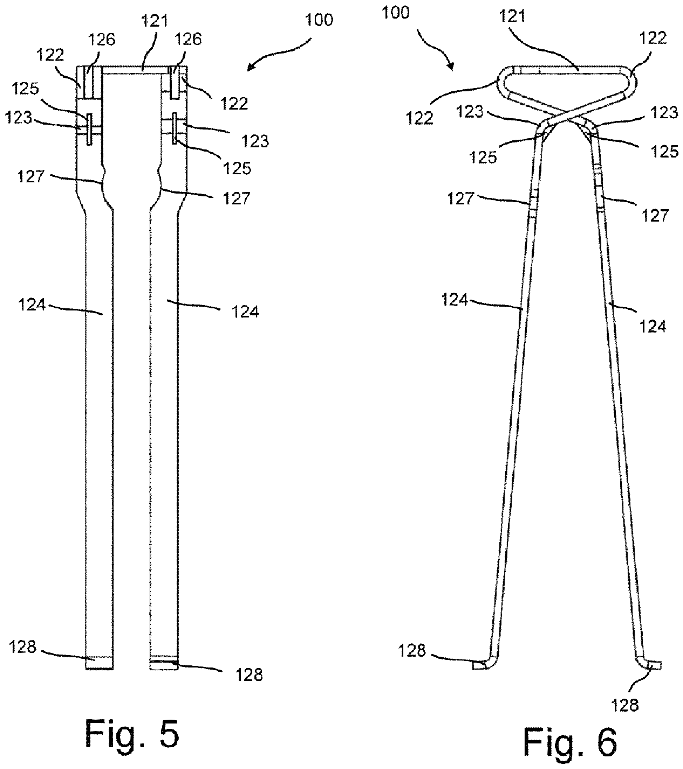

Wie man am Besten in den Figuren 3 und 5 sehen kann, weisen die Schenkel 124 entsprechende Einrastabschnitte 127 auf, mit denen die Federeinrichtung den Schaft 151 des Bolzens 150 einspannt, um die Federeinrichtung zusätzlich zu sichern.

Die Figuren 5 und 6 zeigen Details einer alternativen Ausführung der Erfindung, wobei im Zusammenhang mit diesen Figuren im Wesentlichen nur die Unterschiede zu den im Zusammenhang mit den anderen Figuren beschriebenen Ausführungen der Erfindung erläutert werden und im Übrigen auf deren Beschreibung verwiesen wird.

Gemäß der in den Figuren 5 und 6 gezeigten alternativen Ausführung der Erfindung kann es Vorteilhaft sein, an den Schenkeln 124 in dem Biegebereich 122 Rillen 126 vorzusehen, damit die Drehpunkte der Schenkel durch den geringeren Beigewiderstand weiter nach außen verlagert werden. Alternativ oder zusätzlich kann es vorteilhaft sein, die Gegenbiegebereiche 123 der Schenkel 124 mit Verstärkungen 125 zu versehen, damit sich die Schenkel 124 vornehmlich in den Biegebereichen 122 biegen.

Die Bremszange 100 weist drei Brücken 130 auf, die die beidseits der nicht dargestellten Bremsscheibe angeordneten Zylinder 101 auf bekannte Weise miteinander verbinden.

An den Brücken 130 sind an den Rändern jeweils Kühlrippen 132 vorgesehen, zwischen denen eine Aussparung 131 angeordnet ist. Das hat den Vorteil, dass gegenüber dem Stand der Technik bei einer größeren Steifigkeit auch eine größere Oberfläche ausgebildet wird, wodurch die Bremszange besser gekühlt wird.

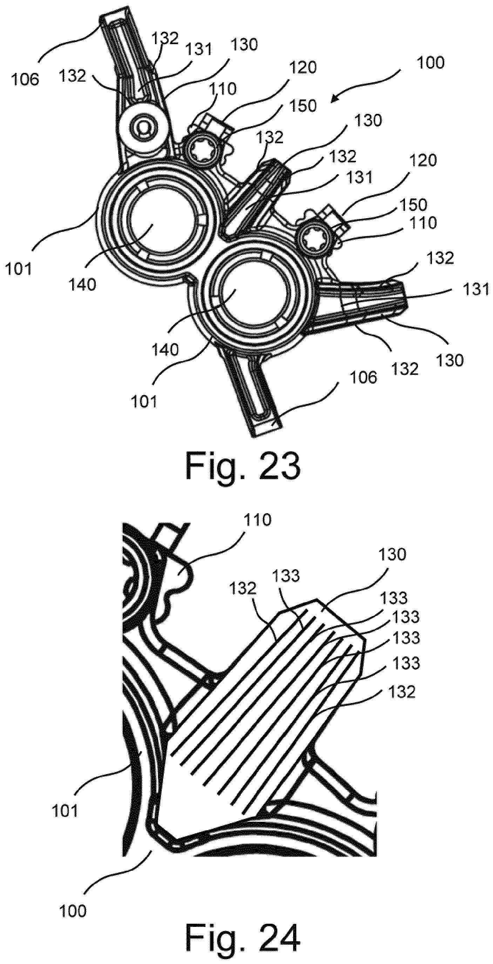

Figur 24 zeigt Details einer alternativen Ausführung der Erfindung, wobei im Zusammenhang mit dieser Figur im Wesentlichen nur die Unterschiede zu den im Zusammenhang mit den anderen Figuren beschriebenen Ausführungen der Erfindung erläutert werden und im Übrigen auf deren Beschreibung verwiesen wird.

Gemäß der in der Fig. 24 gezeigten Ausführung der Erfindung sind auf der Brücke 130 mehrere Kühlrippen 132 und 133 vorgesehen, um eine noch stärkere Kühlung zu erreichen. Derartige Kühlrippen 132, 133 können auf einer Brücke 130 oder auf mehreren Brücken 130 oder an allen Brücken 130 vorgesehen sein.

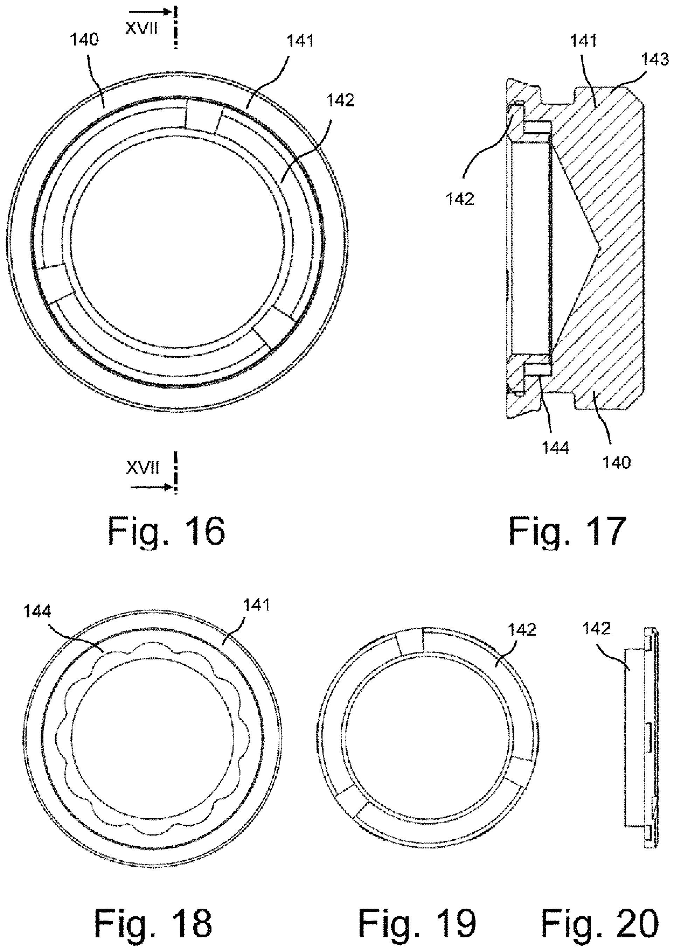

Die Figuren 16 bis 20 zeigen den Aufbau des Deckels 140, mit dem der offene Zylinder 101 verschlossen wird. Die Bremszange 100 weist gegenüberliegende Zylinder 101 auf, von denen einer offen ausgebildet ist, damit die Kolben in die Zylinder 101 eingeführt werden können. Nach der Montage der Kolben wird die offene Seite des Zylinders mit dem Deckel 140 verschlossen. Der Deckel 140 weist ein Verschlussglied 141 und eine Blende 142 auf. Beim Verschließen wird das Verschlussglied 141 mit seinem Gewindeabschnitt 143 in ein entsprechendes Gewinde des Zylinders 101 eingedreht. Dazu kann ein geeignetes Werkzeug in einen Werkzeugeingriffabschnitt 144 eingreifen. Nachdem die Öffnung verschlossen ist, kann die Blende 142 in das Verschlussglied 141 eingesetzt werden. Vorteilhafterweise greift die Blende 142 in den Werkzeugeingriffabschnitt 144 ein und wird daran befestigt.

## Patentansprüche

1. Bremszange (100) eines hydraulischen Bremssystem mit mehreren Kolben, die jeweils in einem Zylinder (101) entlang der Achse des Zylinders (101) verschiebbar angeordnet sind, mehreren Bremsbelägen (110), die bei der Betätigung der Bremse von den Kolben gegen eine Bremsscheibe gedrückt werden, und zumindest einer Federeinrichtung (120), die eine Basis (121) und sich gegenüberliegende Schenkel (124) aufweist, die sich von der Basis (121) zu den Bremsbelägen (110) erstrecken, **dadurch gekennzeichnet dass** die Schenkel der Federeinrichtung an ihren Enden Halteabschnitte (128) aufweisen, die an der Unterkante der Bremsbeläge (116) angreifen, und dass sich die sich gegenüberliegenden Schenkel (124) von einer Seite der, sich in axiale Richtung erstreckende Basis (121) zu einem Bremsbelag (110) erstrecken, der auf der gegenüberliegenden Seite angeordnet ist.

2. Bremszange nach Anspruch 1, **dadurch gekennzeichnet, dass** die sich gegenüberliegenden Schenkel (121) der Federeinrichtung (120) zueinander versetzt angeordnet sind.

3. Bremszange nach einem der vorhergehenden Ansprüche, **dadurch gekennzeichnet, dass** die Schenkel (124) jeweils einen Biegebereich (122) und einen Gegenbiegebereich (123) aufweisen.

4. Bremszange nach einem der vorhergehenden Ansprüche, **dadurch gekennzeichnet, dass** die sich gegenüberliegenden Schenkel (124) jeweils einen Biegebereich (122) aufweisen, deren Abstand größer als der Abstand der beiden entsprechenden sich gegenüberliegenden Bremsbeläge (110) ist, an denen die Schenkel anliegen.

5. Bremszange nach einem der vorhergehenden Ansprüche, **dadurch gekennzeichnet, dass** sich die Biegebereiche über einen Winkelbereich von mehr als 120 Grad erstrecken.

6. Bremszange nach Anspruch 5, **dadurch gekennzeichnet, dass** sich die Biegebereiche über einen Winkelbereich von mehr als 150 Grad erstrecken.

7. Bremszange nach einem der vorhergehenden Ansprüche, **dadurch gekennzeichnet, dass** sich die Gegenbiegebereiche über einen Winkelbereich von mehr als 30 Grad erstrecken.

8. Bremszange nach Anspruch 5, **dadurch gekennzeichnet, dass** sich die Gegenbiegebereiche über einen Wickelbereich von mehr als 60 Grad erstrecken.

9. Bremszange nach einem der vorhergehenden Ansprüche, **dadurch gekennzeichnet, dass** die Bremszange vier Kolben aufweist, die in zwei sich gegenüberliegenden Zylinderpaaren angeordnet sind.

10. Bremszange nach einem der vorhergehenden Ansprüche, **dadurch gekennzeichnet, dass** die Bremszange vier Bremsbeläge aufweist, die jeweils einem Kolben zugeordnet sind.

11. Bremszange nach einem der vorhergehenden Ansprüche, **dadurch gekennzeichnet, dass** die Bremsbeläge einen geteilten Bremsbelag aufweisen, zwischen denen sich eine Nut zur Aufnahme eines Schenkels der Federeinrichtung erstreckt.

12. Bremszange nach einem der vorhergehenden Ansprüche, **dadurch gekennzeichnet, dass** die Schenkel in einer Nut verlaufen, die zwischen Belagsteilen des Bremsbelags vorgesehen oder in dem Belag ausgebildet ist.

13. Bremszange nach einem der vorhergehenden Ansprüche, **dadurch gekennzeichnet, dass** die Halteabschnitte in Eingriffsöffnungen in dem Belagsträger eingreifen.

14. Bremszange nach Anspruch 13, **dadurch gekennzeichnet, dass** die Eingriffsöffnungen in Aussparungen des Belags vorgesehen sind.

15. Hydraulische Bremse, insbesondere hydraulische Scheibenbremse mit einer Bremszange nach einem der vorhergehenden Ansprüche.

## Claims

1. Brake caliper (100) of a hydraulic brake system comprising a plurality of pistons, each of which is slidably arranged in a cylinder (101) along the axis of the cylinder (101), a plurality of brake pads (110), which are pressed against a brake disk by the pistons when the brake is actuated, and at least one spring device (120), which has a base (121) and opposite legs (124), which extend from the base (121) to the brake pads (110),
**characterized in that**
the legs of the spring device have holding portions (128) at their ends, said holding portions engage at the lower edge of the brake pads (116), and that the opposite legs (124) extend from one side of the base (121) extending in an axial direction to a brake pad (110), which is arranged on the opposite side.

2. Brake caliper according to claim 1, **characterized in that** the opposite legs (121) of the spring device (120) are arranged so as to be displaced in relation to one another.

3. Brake caliper according to any of the preceding claims, **characterized in that** each of the legs (124) has a bending region (122) and a counter-bending region (123).

4. Brake caliper according to any of the preceding claims, **characterized in that** each of the opposite legs (124) has a bending region (122), the distance of which is larger than the distance of the two corresponding opposite brake pads (110), against which the legs abut.

5. Brake caliper according to any of the preceding claims, **characterized in that** the bending regions extend over an angular region of more than 120 degrees.

6. Brake caliper according to claim 5, **characterized in that** the bending regions extend over an angular region of more than 150 degrees.

7. Brake caliper according to any of the preceding claims, **characterized in that** the counter-bending regions extend over an angular region of more than 30 degrees.

8. Brake caliper according to claim 5, **characterized in that** the counter-bending regions extend over an angular region of more than 60 degrees.

9. Brake caliper according to any of the preceding claims, **characterized in that** the brake caliper has four pistons which are arranged in two opposite cylinder pairs.

10. Brake caliper according to any of the preceding claims, **characterized in that** the brake caliper has four brake pads, each of which is associated with a piston.

11. Brake caliper according to any of the preceding claims, **characterized in that** the brake pads have a divided brake pad, between which a groove for receiving a leg of the spring device extends.

12. Brake caliper according to any of the preceding claims, **characterized in that** the legs extend in a groove which is provided between pad parts of the brake pad or is formed in the pad.

13. Brake caliper according to any of the preceding claims, **characterized in that** the holding portions engage in engagement openings in the pad support.

14. Brake caliper according to claim 13, **characterized in that** the engagement openings are provided in recesses of the pad.

15. Hydraulic brake, in particular hydraulic disk brake, having a brake caliper according to any of the preceding claims.

## Revendications

1. Étrier de frein (100) d'un système de freinage hydraulique comportant plusieurs pistons qui sont agencés chacun dans un cylindre (101) de façon mobile en translation le long de l'axe du cylindre (101), plusieurs garnitures de frein (110) qui, lors d'un actionnement du frein, sont pressées contre un disque de frein par les pistons, et au moins un moyen formant ressort (120) qui présente une embase (121) et des branches opposées (124) qui s'étendent depuis l'embase (121) jusqu'aux garnitures de frein (110),
**caractérisé en ce que**
les branches du moyen formant ressort comprennent des portions de retenue (128) à leurs extrémités, qui viennent attaquer l'arête inférieure des garnitures de frein (116),
et **en ce que** les branches (124) opposées l'une à l'autre s'étendent depuis un côté de l'embase (121) s'étendant en direction axiale jusqu'à une garniture de frein (110) agencée sur le côté opposé.

2. Étrier de frein selon la revendication 1,
**caractérisé en ce que**
les branches (124) opposées l'une à l'autre du moyen formant ressort (120) sont agencées en décalage l'une de l'autre.

3. Étrier de frein selon l'une des revendications précédentes,
**caractérisé en ce que**
les branches (124) présentent chacune une zone cintrée (122) et une zone cintrée en sens contraire (123).

4. Étrier de frein selon l'une des revendications précédentes,
**caractérisé en ce que**
les branches (124) opposées l'une à l'autre présentent chacune une zone cintrée (122), dont la distance est supérieure à la distance des deux garnitures de frein correspondantes (110) opposées l'une à l'autre contre lesquelles s'appuient les branches.

5. Étrier de frein selon l'une des revendications précédentes,
**caractérisé en ce que**
les zones cintrées s'étendent sur une plage angulaire de plus de 120 degrés.

6. Étrier de frein selon la revendication 5,
**caractérisé en ce que**
les zones cintrées s'étendent sur une plage angulaire de plus de 150 degrés.

7. Étrier de frein selon l'une des revendications précédentes,
**caractérisé en ce que**
les zones cintrées en sens contraire s'étendent sur une plage angulaire de plus de 30 degrés.

8. Étrier de frein selon la revendication 5,
**caractérisé en ce que**
les zones cintrées en sens contraire s'étendent sur une plage angulaire de plus de 60 degrés.

9. Étrier de frein selon l'une des revendications précédentes,
**caractérisé en ce que**
l'étrier de frein comprend quatre pistons qui sont agencés dans deux paires de cylindres opposées l'une à l'autre.

10. Étrier de frein selon l'une des revendications précédentes,
**caractérisé en ce que**
l'étrier de frein comprend quatre garnitures de frein qui sont associées chacune à un piston.

11. Étrier de frein selon l'une des revendications précédentes,
**caractérisé en ce que**
les garnitures de frein présentent une garniture de frein divisée, entre lesquelles s'étend une rainure pour loger une branche du moyen formant ressort.

12. Étrier de frein selon l'une des revendications précédentes,
**caractérisé en ce que**
les branches s'étendant dans une rainure qui est prévue entre des parties de la garniture de frein ou qui est réalisée dans la garniture.

13. Étrier de frein selon l'une des revendications précédentes,
**caractérisé en ce que**
les portions de retenue viennent s'engager dans des ouvertures d'engagement dans le porte-garniture.

14. Étrier de frein selon la revendication 13,
**caractérisé en ce que**
les ouvertures d'engagement sont prévues dans des échancrures de la garniture.

15. Frein hydraulique, en particulier frein hydraulique à disque comportant un étrier de frein selon l'une des revendications précédentes.
